# EUROPÄISCHE PATENTANMELDUNG

(11) **EP 3 222 990 A1**
(43) Veröffentlichungstag der Anmeldung: **27.09.2017**
(21) Anmeldenummer: 16161993.7
(22) Anmeldetag: 23.03.2016
(51) Int. Cl.: G01N 1/38, G01N 35/04

(54) **VORRICHTUNG ZUM DURCHMISCHEN VON REAGENZFLÜSSIGKEITEN IN EINEM AUTOMATISCHEN ANALYSEGERÄT**

(71) Anmelder: Siemens Healthcare Diagnostics Products GmbH, 35041 Marburg (DE)
(72) Erfinder: Filzinger, Joerg, 65830 Kriftel (DE); Butz, Thomas, 65239 Hochheim am Main (DE); Kalbfell, Heiko, 65232 Taunusstein (DE)

(57) **Zusammenfassung**

Die vorliegende Erfindung betrifft ein automatisches Analysegerät mit einer Vorrichtung zum Transport eines Reagenzflüssigkeitsbehälters und einer schwenkbaren Haltevorrichtung (40) für einen Reagenzflüssigkeitsbehälter. Die Haltevorrichtung (40) ist maximal um 45 Grad relativ zur Vertikalen schwenkbar und ermöglicht damit ein schaumfreies Durchmischen von Reagenzflüssigkeiten.

## Beschreibung

Die vorliegende Erfindung liegt auf dem Gebiet der automatischen Analysegeräte und betrifft ein automatisches Analysegerät mit einer Vorrichtung zum Transport eines Reagenzflüssigkeitsbehälters und einer schwenkbaren Haltevorrichtung, in der der Reagenzflüssigkeitsbehälter geschwenkt werden kann.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten, erfolgt vielfach, indem ein Aliquot einer Körperflüssigkeit eines Patienten gleichzeitig oder nacheinander mit einer oder mehreren Reagenzflüssigkeiten in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Die für die verschiedenen Analyseverfahren benötigten Reagenzflüssigkeiten werden in Reagenzflüssigkeitsbehältern aufbewahrt. Moderne Analysegeräte sind üblicherweise mit mindestens einem Vorratsbehälter ausgestattet, in dem in einer Vielzahl von Aufnahmepositionen jeweils ein Reagenzflüssigkeitsbehälter vorrätig gehalten wird. Eine oder mehrere Pipettiervorrichtungen können auf die so gelagerten Reagenzflüssigkeitsbehälter zugreifen, um Reagenzflüssigkeit zu entnehmen und in ein Reaktionsgefäß zu transferieren.

Ist einer der Reagenzflüssigkeitsbehälter verbraucht oder hat er sein Haltbarkeitsdatum überschritten, ist ein Austausch erforderlich. Um die Arbeitsabläufe in dem Analysegerät nicht wegen eines manuellen Austauschs durch einen Benutzer unterbrechen zu müssen, ist in vielen modernen Analysegeräten ein zweiter, separater Vorratsbehälter für Reagenzflüssigkeitsbehälter vorgesehen, auf den keine Pipettiervorrichtungen zugreifen und der für einen Benutzer zum Beladen und Entladen zugänglich ist. Der Transport der Reagenzflüssigkeitsbehälter vom zweiten in den ersten Vorratsbehälter und umgekehrt erfolgt mit Hilfe einer automatischen Transporteinheit.

In der EP-A1-2730927 ist ein automatisches Analysegerät beschrieben, das zwei Vorratsbehälter mit jeweils einer Vielzahl von Aufnahmepositionen für Reagenzflüssigkeitsbehälter aufweist. Zum Transport eines Reagenzflüssigkeitsbehälters von dem einen in den anderen Vorratsbehälter ist eine Transporteinheit vorgesehen, die eine horizontal und vertikal verfahrbare Greifeinrichtung zum Transport eines Reagenzflüssigkeitsbehälters umfasst. Die Transporteinheit umfasst ferner eine stationäre Schütteleinrichtung, in die bei Bedarf mit Hilfe der Greifeinrichtung ein Reagenzflüssigkeitsbehälter eingesetzt werden kann. Die Schütteleinrichtung dient dem Durchmischen von Reagenzflüssigkeiten, um eine Sedimentation oder eine Entmischung von Reagenzbestandteilen und damit letztendlich unpräzise Messergebnisse zu verhindern. Gemäß der EP-A1-2730927 kann die Schütteleinrichtung wie ein Rütteltisch, wie ein Vortexer oder in Form einer über Kopf rotierenden Halterung ausgeformt sein.

Problematisch ist jedoch, dass insbesondere Detergenz-haltige Reagenzflüssigkeiten bei Bewegung zur Schaumbildung neigen. Dies hat den Nachteil, dass eine präzise Füllstandbestimmung mittels kapazitiver Sensoren, die in die Reagenzflüssigkeitsbehälter eingeführt werden, wie zum Beispiel mittels entsprechend ausgestalteter Pipettiernadeln, nicht möglich ist, weil Schaum, der sich durch die Schüttelbewegung auf der Oberfläche der flüssigen Phase gebildet hat, als Flüssigkeit detektiert wird.

Der vorliegenden Erfindung liegt daher die Aufgabe zugrunde, ein automatisches Analysegerät mit einer Transporteinheit für Reagenzflüssigkeitsbehälter, welche auch eine Schütteleinrichtung in Form einer über Kopf rotierenden Halterung aufweist, so zu modifizieren, dass eine möglichst schaumfreie Durchmischung von Reagenzflüssigkeiten ermöglicht wird.

Die Aufgabe wird erfindungsgemäß dadurch gelöst, dass die Bewegbarkeit der Halterung, in die der Reagenzflüssigkeitsbehälter zum Durchmischen eingesetzt wird, beschränkt wird und zwar so, dass die Halterung maximal um 45 Grad relativ zur Vertikalen schwenkbar ist.

Es wurde gefunden, dass Schwenkbewegungen, bei denen die Halterung und damit ein darin positionierter Reagenzflüssigkeitsbehälter um maximal 45 Grad relativ zur Vertikalen hin und her geschwenkt wird, für eine optimale Durchmischung sorgen, ohne dass dabei Schaum auf der Flüssigkeitsoberfläche entsteht.

Gegenstand der vorliegenden Erfindung ist also ein automatisches Analysegerät mit
- einer Vorrichtung zur Messung einer Eigenschaft einer flüssigen Probe,
- einer Vielzahl von Aufnahmepositionen für Reagenzflüssigkeitsbehälter, und
- mindestens einer horizontal und vertikal verfahrbaren Vorrichtung zum Transport eines Reagenzflüssigkeitsbehälters von einer ersten Aufnahmeposition in eine zweite Aufnahmeposition, und
- einer relativ zur Vertikalen schwenkbaren Haltevorrichtung für einen Reagenzflüssigkeitsbehälter,
wobei die Haltevorrichtung maximal um 45 Grad relativ zur Vertikalen schwenkbar ist.

Die schwenkbare Haltevorrichtung ist vorzugsweise so ausgestaltet, dass sie für die Aufnahme eines Reagenzflüssigkeitsbehälters geeignet ist. Dabei handelt es sich häufig um eine baulich angepasste Aufnahmevorrichtung, die eine aufrechte Aufbewahrung des Reagenzflüssigkeitsbehälters ermöglicht, wie beispielsweise eine Hülse oder ein Gestell, in die oder das ein spezifisch ausgestalteter Flüssigkeitsbehälter formschlüssig eingeführt werden kann.

Die Haltevorrichtung ist bevorzugterweise um eine senkrecht zur Vertikalen stehende Drehachse schwenkbar. Dazu kann die Haltevorrichtung zwischen zwei Haltearmen beweglich gelagert sein. Die gedachte Verbindung der beiden Lager bildet die Drehachse.

Grundsätzlich kann die schwenkbare Haltevorrichtung an einem beliebigen Ort in dem automatischen Analysegerät vorgesehen sein, der für die horizontal und vertikal verfahrbare Vorrichtung zum Transport eines Reagenzflüssigkeitsbehälters von einer ersten Aufnahmeposition in eine zweite Aufnahmeposition erreichbar ist. Die schwenkbare Haltevorrichtung kann zum Beispiel an einem Stativarm befestigt sein. Vorzugsweise ist die Haltevorrichtung über ein Verbindungselement an dem Stativarm befestigt.

Für den Fall, dass die Haltevorrichtung zwischen zwei Haltearmen beweglich gelagert ist, können die beiden Haltearme an dem Verbindungselement angebracht oder von diesem gebildet sein.

Zur Erzeugung einer Schwenkbewegung der Haltevorrichtung kann die Haltevorrichtung mit einer Kolbenstange verbunden sein. Zum Antrieb der Kolbenstange ist die Kolbenstange vorzugsweise mit einem motorisch betriebenen Exzenter verbunden. Die Drehbewegung des Exzenters versetzt über die Kolbenstange die Haltevorrichtung in die Schwenkbewegung.

Für den Fall, dass die Haltevorrichtung an einem Verbindungselement angebracht ist (zum Beispiel zur Befestigung an einem Stativarm) ist der motorisch betriebene Exzenter vorzugsweise ebenfalls an dem Verbindungselement angebracht.

In einer bevorzugten Ausführungsform ist an dem Verbindungselement ferner ein Sensor zur Positionsbestimmung der Haltevorrichtung angebracht. Mit dem Sensor kann einerseits die Ausführung der Schwenkbewegungen überwacht werden und andererseits die Ausrichtung der Haltevorrichtung überprüft werden. Die Ausrichtung der Haltevorrichtung ist zum Beispiel in dem Moment wichtig, in dem ein Reagenzflüssigkeitsbehälter mit Hilfe der automatischen Transportvorrichtung in der Halterung platziert werden soll oder entnommen werden soll. Ist die Transportvorrichtung beispielsweise so ausgeführt, dass der Reagenzflüssigkeitsbehälter immer senkrecht von oben eingeführt oder entnommen werden muss, ist sicher zu stellen, dass die Halterung entsprechend ausgerichtet ist.

Bevorzugterweise handelt es sich bei dem Sensor zur Positionsbestimmung der Haltevorrichtung um ein optoelektronisches System, wie zum Beispiel eine Lichtschranke. Die Lichtschranke kann an dem Verbindungselement angebracht sein, während die Haltevorrichtung ein Element zur Unterbrechung eines Lichtstrahls in der Lichtschranke aufweisen kann.

Ein bevorzugtes automatisches Analysegerät weist einen ersten und einen zweiten Vorratsbehälter mit jeweils einer Vielzahl von Aufnahmepositionen für jeweils einen Reagenzflüssigkeitsbehälter auf. Die horizontal und vertikal verfahrbare Vorrichtung zum Transport eines Reagenzflüssigkeitsbehälters ist dabei vorzugsweise so angeordnet, dass sie den Transport von einer ersten Aufnahmeposition für einen Reagenzflüssigkeitsbehälter in dem ersten Vorratsbehälter in eine zweite Aufnahmeposition in dem zweiten Vorratsbehälter und umgekehrt bewerkstelligen kann.

Der erste Vorratsbehälter kann so ausgestaltet sein, dass er für einen Benutzer zugänglich ist, zum Beispiel über ein mit einer Klappe oder Tür verschließbares Zugriffsfenster. Dies ermöglicht die manuelle Beladung des automatischen Analysegeräts mit neuen Reagenzflüssigkeitsbehältern sowie die Entnahme leerer Behälter oder von Behältern mit abgelaufenem Haltbarkeitsdatum.

Der zweite Vorratsbehälter ist üblicherweise so ausgestaltet, dass er für einen Benutzer während des Betriebes des automatischen Analysegeräts nicht zugänglich ist. Lediglich die automatische Transportvorrichtung für Reagenzflüssigkeitsbehälter sowie Pipettiervorrichtungen haben Zugriff auf die in dem zweiten Vorratsbehälter gelagerten Reagenzflüssigkeitsbehälter. Ein bevorzugtes automatisches Analysegerät weist also ferner mindestens eine Pipettiervorrichtung auf, die so beweglich ist, dass sie auf einen in dem zweiten Vorratsbehälter gelagerten Reagenzflüssigkeitsbehälter Zugriff hat.

Die Aufnahmepositionen in dem ersten und/oder zweiten Vorratsbehälter sind vorzugsweise kreisförmig, gegebenenfalls in mehreren konzentrischen Kreisen auf einem drehbaren Teller angeordnet.

In einer bevorzugten Ausführungsform weist das automatische Analysegerät ferner eine Steuereinrichtung auf, die so konfiguriert ist, dass sie ein Verfahren mit den folgenden Schritten steuert:
- Entnahme eines Reagenzflüssigkeitsbehälters aus einer ersten Aufnahmeposition mittels der Vorrichtung zum Transport eines Reagenzflüssigkeitsbehälters und Transport zu der schwenkbaren Haltevorrichtung;
- Positionieren des Reagenzflüssigkeitsbehälters in der schwenkbaren Haltevorrichtung; und
- Schwenken der Haltevorrichtung.

Vorzugsweise ist die Steuereinrichtung ferner so konfiguriert, dass die Haltevorrichtung maximal 5 bis 20 mal hin und her geschwenkt wird.

Es wurde gefunden, dass 5 bis 20 Schwenkbewegungen (jeweils hin und her), bei denen die Halterung und damit ein darin positionierter Reagenzflüssigkeitsbehälter um maximal 45 Grad relativ zur Vertikalen hin und her geschwenkt wird, für eine optimale Durchmischung sorgen, ohne dass dabei Schaum auf der Flüssigkeitsoberfläche entsteht.

Die horizontal und vertikal verfahrbare Vorrichtung zum Transport eines Reagenzflüssigkeitsbehälters kann je nach Art der zu transferierenden Reagenzflüssigkeitsbehälter unterschiedlich ausgestaltet sein. Bevorzugterweise umfasst die Transportvorrichtung einen Greifer, der dazu ausgebildet ist, einen Reagenzflüssigkeitsbehälter aus einer Aufnahmeposition senkrecht nach oben zu heben oder ihn senkrecht von oben darin abzusetzen. Dazu kann der Greifer zum Beispiel an einer vertikal verfahrbaren Aufhängung befestigt sein, die wiederum an einer Schiene angeordnet ist, entlang der die Aufhängung horizontal verfahrbar ist. Alternativ kann sich der Greifer auch an einem dreidimensional bewegbaren Roboterarm befinden.

Unter einer "Aufnahmeposition" ist ein Ort gemeint, der für die Platzierung eines Reagenzflüssigkeitsbehälters vorgesehen ist. Dabei handelt es sich häufig um eine baulich angepasste Aufnahmevorrichtung, die eine standsichere Aufbewahrung des Behälters ermöglicht, wie beispielsweise Hülsen, in die ein spezifisch ausgestalteter Behälter formschlüssig eingeführt werden kann.

Ein "Reagenzflüssigkeitsbehälter" enthält mindestens eine Flüssigkeit, die ein oder mehrere Substanzen zum Nachweis eines oder mehrerer Analyten enthält, wie z.B. Antikörperlösungen, Farbstofflösungen, Antikörperbeschichtete Latexpartikel in Lösung etc. Ein Reagenzflüssigkeitsbehälter kann ferner mehrkammrig ausgestaltet sein und mehrere, verschiedene Reagenzflüssigkeiten enthalten.

Bei der Vorrichtung zur Messung einer Eigenschaft einer flüssigen Probe handelt es sich vorzugsweise um ein optisches Messsystem, insbesondere um eine photometrische (z.B. spektrophotometrische, turbidimetrische, nephelometrische), fluorometrische oder luminometrische Messstation.

Die Erfindung wird im Folgenden anhand einer Zeichnung erläutert.

Darin zeigen
- FIG. 1: ein erfindungsgemäßes automatisches Analysegerät;
- FIG. 2: die Reagenzstation des automatischen Analysegeräts;
- FIG. 3: eine schwenkbare Haltevorrichtung für einen Reagenzflüssigkeitsbehälter.

Gleiche Teile sind in allen Figuren mit denselben Bezugszeichen versehen.

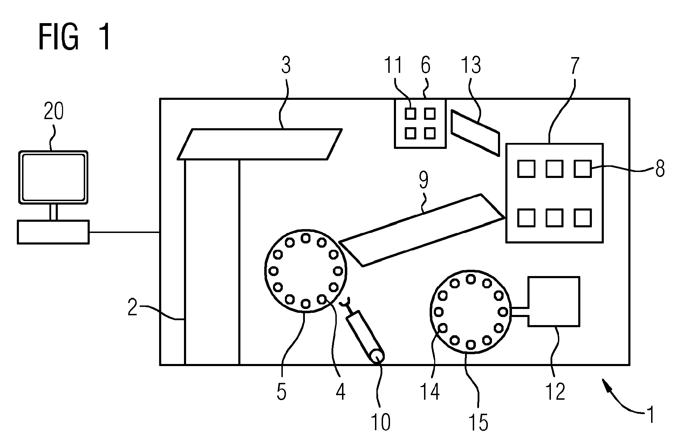

FIG. 1 ist eine schematische Darstellung eines automatischen Analysegeräts 1 mit einigen darin enthaltenen Bauteilen. Hierbei werden nur die wichtigsten Bauteile stark vereinfacht dargestellt, um die grundsätzliche Funktion des automatischen Analysegeräts 1 zu erläutern, ohne hierbei detailliert die einzelnen Teile jedes Bauteils darzustellen.

Das automatische Analysegerät 1 ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

Die Patientenproben werden dem automatischen Analysegerät 1 auf nicht näher dargestellten Schlitten über eine Zuführungsschiene 2 zugeführt. Informationen hinsichtlich der pro Probe durchzuführenden Analysen können beispielsweise mittels auf den Probengefäßen angebrachten Strichcodes übergeben werden, die in dem automatischen Analysegerät 1 ausgelesen werden. Aus den Probengefäßen werden mit Hilfe einer ersten Pipettiervorrichtung 3 Probenaliquots mittels einer Pipettiernadel entnommen.

Die Probenaliquots werden ebenfalls nicht näher dargestellten Küvetten zugeführt, die in Aufnahmepositionen 4 einer drehbaren, auf 37 °C temperierten Inkubationseinrichtung 5 angeordnet sind. In dem auf ca. 8-10 °C gekühlten Reagenzgefäßvorratsbehälter 7 werden in Aufnahmepositionen 8 Reagenzgefäße (Reagenzflüssigkeitsbehälter) mit verschiedenen Reagenzflüssigkeiten aufbewahrt. Reagenzflüssigkeit wird mittels der Pipettiernadel einer zweiten Pipettiervorrichtung 9 aus einem Reagenzgefäß entnommen und zur Bereitstellung eines Reaktionsansatzes in eine Küvette, die bereits ein Probenaliquot enthält, abgegeben. Die Küvette mit dem Reaktionsansatz wird mit einem Greifer des Transferarms 10 aus einer Aufnahmeposition 4 der Inkubationseinrichtung 5 entnommen und in eine Aufnahmeposition 14 der drehbaren Aufnahmevorrichtung 15 für die photometrische Messstation 12 transportiert, wo die Extinktion des Reaktionsansatzes gemessen wird.

Der Reagenzgefäßvorratsbehälter 7 ist für einen Benutzer während des Betriebs des Analysegeräts 1 nicht erreichbar. Daher ist ein weiterer Reagenzgefäßvorratsbehälter 6 vorgesehen, den ein Benutzer über eine verschließbare Tür manuell erreichen kann, um neue Reagenzflüssigkeitsbehälter in die Aufnahmepositionen 11 einzusetzen und leere Behälter oder Behältern mit abgelaufenem Haltbarkeitsdatum zu entnehmen.

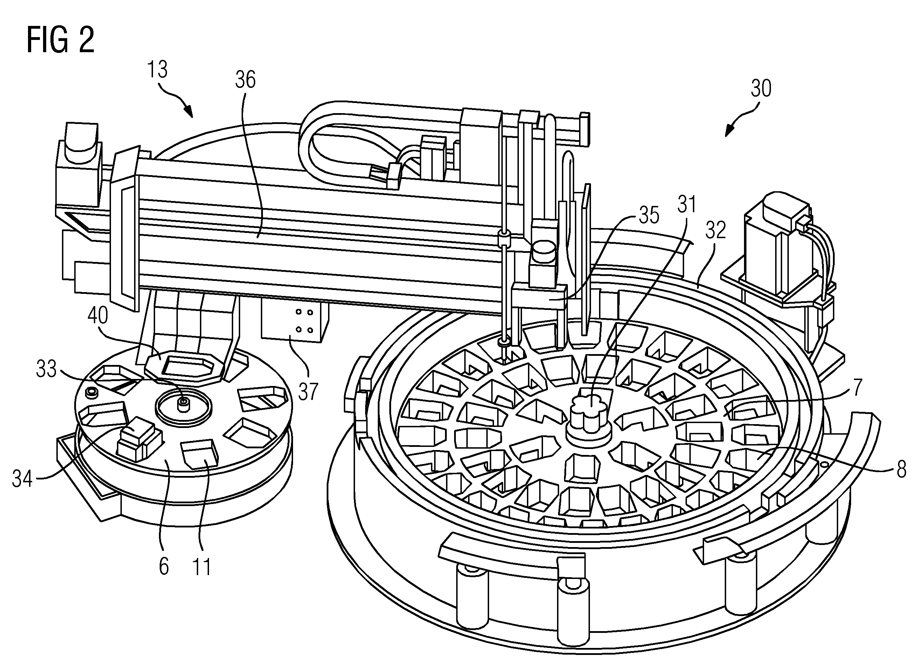

Zum Transport von Reagenzflüssigkeitsbehältern zwischen den beiden Reagenzgefäßvorratsbehältern 6, 8 ist eine Transporteinheit 13 vorgesehen, die eine in FIG. 2 näher dargestellte, horizontal und vertikal verfahrbare Greifeinrichtung zum Transport eines Reagenzflüssigkeitsbehälters umfasst. Die Transporteinheit 13 umfasst ferner eine ebenfalls in FIG. 2 näher dargestellte, stationäre Schütteleinrichtung, in die bei Bedarf mit Hilfe der Greifeinrichtung ein Reagenzflüssigkeitsbehälter eingesetzt werden kann.

Der gesamte Prozess wird von einer Steuereinheit 20, wie z.B. von einem über eine Datenleitung angeschlossenen Rechner gesteuert, unterstützt durch eine Vielzahl weiterer, nicht näher dargestellter elektronischer Schaltungen und Mikroprozessoren innerhalb des automatischen Analysegeräts 1 und seiner Bauteile.

FIG. 2 zeigt schematisch den Aufbau einer Reagenzstation 30 des Analysegeräts 1 aus FIG. 1. Die Reagenzstation 30 weist einen Reagenzgefäßvorratsbehälter 7 auf, auf den mit einer nicht näher dargestellten Pipettiereinrichtung während der automatisiert ablaufenden Analyse einer Vielzahl von Proben zugreift.

Der Reagenzgefäßvorratsbehälter 7 ist kreisrund ausgestaltet und um eine Achse 31 drehbar gelagert. Die Drehung wird durch die Steuereinheit gesteuert. Der Reagenzgefäßvorratsbehälter 7 ist von einer Kühleinheit 32 umgeben, die die Haltbarkeit der gelagerten Reagenzflüssigkeiten gewährleistet. Die Reagenzflüssigkeitsbehälter selbst sind nicht dargestellt, lediglich die Aufnahmepositionen 8 für die Reagenzflüssigkeitsbehälter, die in konzentrischen Kreisen mit drei unterschiedlichen Radien um die Achse 31 angeordnet sind.

Der Reagenzgefäßvorratsbehälter 7 ist für den Benutzer im Regelbetrieb unzugänglich. Zur Be- und Entladung der Reagenzflüssigkeitsbehälter weist die Reagenzstation 30 einen weiteren Reagenzgefäßvorratsbehälter 6 auf, der um eine Achse 33 drehbar gelagert ist. Der Reagenzgefäßvorratsbehälter 6 umfasst acht Aufnahmepositionen 11 für Reagenzflüssigkeitsbehälter, die kreisförmig um die Achse 33 angeordnet sind. Ein Reagenzflüssigkeitsbehälter 34 ist in einer Aufnahmeposition 11 dargestellt. Der Benutzer kann durch ein nicht näher dargestelltes, stationäres, d.h. nicht mitdrehendes Zugriffsfenster im Gehäuse des Analysegeräts auf eine der Aufnahmepositionen 11 zugreifen.

Weiterhin weist die Reagenzstation 30 eine Transporteinheit 13 auf, umfassend eine Greifeinrichtung 35, die dazu ausgebildet ist, die Reagenzflüssigkeitsbehälter senkrecht aus den Aufnahmepositionen 8, 11 zu heben oder sie darin abzusetzen. Die Greifeinrichtung 35 ist an einer Schiene 36 horizontal beweglich angeordnet, die sich im Wesentlichen linear zwischen den Achsen 31, 33 erstreckt.

Zum Entladen eines Reagenzflüssigkeitsbehälters aus dem Reagenzgefäßvorratsbehälter 7, beispielsweise wegen Verbrauch, wird der entsprechende Reagenzflüssigkeitsbehälter mittels der Transporteinheit 13 aus dem Reagenzgefäßvorratsbehälter 7 in den Reagenzgefäßvorratsbehälter 6 transferiert. Dazu wird der Reagenzgefäßvorratsbehälter 7 zunächst derart um die Achse 31 gedreht, dass die entsprechende Aufnahmeposition 8 mit dem auszutauschenden Reagenzflüssigkeitsbehälter unter der Schiene 36 angeordnet ist. Die Greifeinrichtung 35 entnimmt den Reagenzflüssigkeitsbehälter und transportiert ihn entlang der Schiene 36 zum Reagenzgefäßvorratsbehälter 6. Der Reagenzgefäßvorratsbehälter 6 wird derart gedreht, dass eine freie Aufnahmeposition 11 unter der Schiene 36 liegt, und die Greifeinrichtung 35 setzt den Reagenzflüssigkeitsbehälters in die freie Aufnahmeposition 11. Anschließend wird durch Drehung des Vorratsbehälters 6 der Reagenzflüssigkeitsbehälter in die Zugriffsposition transportiert.

Das Einsetzen eines neuen Reagenzflüssigkeitsbehälters und der Transport von dem Reagenzgefäßvorratsbehälter 6 in den Reagenzgefäßvorratsbehälter 7 funktioniert im Wesentlichen in umgekehrter Reihenfolge der Verfahrensschritte.

Während des Transfers wird mittels einer Identifikationseinrichtung 37, die stationär an der Schiene 36 angeordnet ist und einen Barcodeleser umfasst, ein Barcode auf dem jeweiligen Reagenzflüssigkeitsbehälter ausgelesen, der insbesondere Informationen über Inhalt und Haltbarkeitsdatum enthält.

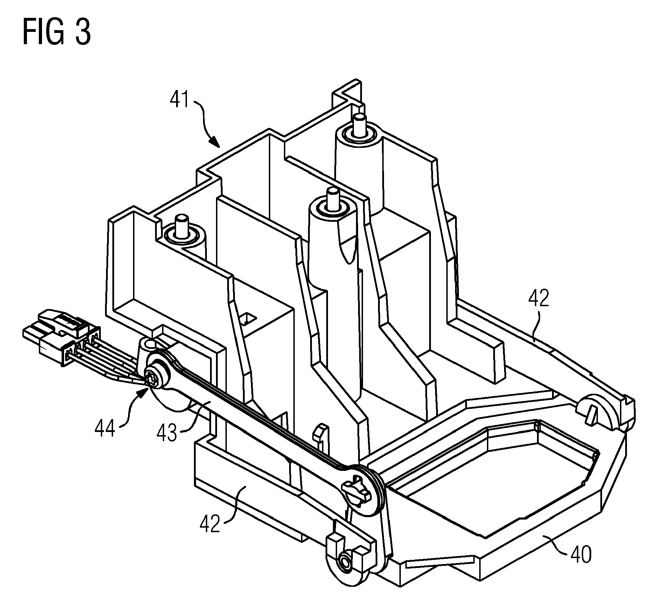

Weiterhin umfasst die Transporteinheit 13 eine in FIG. 3 näher dargestellte schwenkbare Haltevorrichtung 40, die durch die Greifeinrichtung 35 erreichbar ist. Ein neu eingesetzter Reagenzflüssigkeitsbehälter kann hier vor dem Transport in den Reagenzgefäßvorratsbehälter 7 eingesetzt und geschwenkt werden. Weiterhin kann die Steuereinheit des Analysegeräts auch in regelmäßigen Abständen veranlassen, dass Reagenzflüssigkeitsbehälter mit Reagenzien, die dies erfordern, weil sie beispielsweise sedimentierbare Inhaltsstoffe enthalten, mittels der Greifeinrichtung 35 aus dem Reagenzgefäßvorratsbehälter 7 entnommen werden, in der Haltevorrichtung 40 geschwenkt werden und dann zurück in den Reagenzgefäßvorratsbehälter 7 transportiert werden.

FIG. 3 zeigt schematisch die schwenkbare Haltevorrichtung 40 für einen Reagenzflüssigkeitsbehälter aus FIG. 2, die so ausgestaltet ist, dass ein Reagenzflüssigkeitsbehälter von oben eingesetzt werden kann.

Die Haltevorrichtung 40 ist an einem Verbindungselement 41 angebracht, welches wiederum der Anbringung an die Schiene 36 der Transporteinheit 13 dient. Das Verbindungselement 41 umfasst zwei Haltearme 42, zwischen denen die Haltevorrichtung 40 beweglich gelagert ist. Die gedachte Verbindung der beiden Lager bildet die Drehachse, um die die Haltevorrichtung 40 schwenkbar ist.

Zur Erzeugung einer Schwenkbewegung der Haltevorrichtung 40 ist die Haltevorrichtung 40 mit einer Kolbenstange 43 verbunden. Die Kolbenstange 43 ist mit einem motorisch betriebenen Exzenter 44 verbunden, der ebenfalls an dem Verbindungselement 41 montiert ist. Die Drehbewegung des Exzenters 44 versetzt über die Kolbenstange 43 die Haltevorrichtung 40 in die Schwenkbewegung. Die Anordnung ist derart, dass die Haltevorrichtung 40 maximal um 45 Grad relativ zur Vertikalen schwenkbar ist.

### BEZUGSZEICAENLISTE

- 1: Analysegerät
- 2: Zuführungsschiene
- 3: Pipettiervorrichtung
- 4: Aufnahmeposition
- 5: Inkubationseinrichtung
- 6: Reagenzgefäßvorratsbehälter
- 7: Reagenzgefäßvorratsbehälter
- 8: Aufnahmeposition
- 9: Pipettiervorrichtung
- 10: Transferarm
- 11: Aufnahmeposition
- 12: Messstation
- 13: Transporteinheit
- 14: Aufnahmeposition
- 15: Aufnahmevorrichtung
- 20: Steuereinheit

- 30: Reagenzstation
- 31, 33: Achse
- 32: Kühleinheit
- 34: Reagenzflüssigkeitsbehälter
- 35: Greifeinrichtung
- 36: Schiene
- 37: Identifikationseinrichtung
- 40: schwenkbare Haltevorrichtung

- 41: Verbindungslement
- 42: Haltearm
- 43: Kolbenstange
- 44: Exzenter

## Patentansprüche

1. Automatisches Analysegerät (1) mit
• einer Vorrichtung (12) zur Messung einer Eigenschaft einer flüssigen Probe,
• einer Vielzahl von Aufnahmepositionen (8, 11) für Reagenzflüssigkeitsbehälter, und
• mindestens einer horizontal und vertikal verfahrbaren Vorrichtung (35) zum Transport eines Reagenzflüssigkeitsbehälters von einer ersten Aufnahmeposition (11) in eine zweite Aufnahmeposition (8), und
• einer relativ zur Vertikalen schwenkbaren Haltevorrichtung (40) für einen Reagenzflüssigkeitsbehälter,
**dadurch gekennzeichnet,**
**dass** die Haltevorrichtung (40) maximal um 45 Grad relativ zur Vertikalen schwenkbar ist.

2. Automatisches Analysegerät (1) gemäß Anspruch 1, wobei die Haltevorrichtung (40) um eine senkrecht zur Vertikalen stehende Drehachse schwenkbar ist.

3. Automatisches Analysegerät (1) gemäß einem der Ansprüche 1 und 2, wobei die Haltevorrichtung (40) über ein Verbindungselement (41) an einem Stativarm befestigt ist.

4. Automatisches Analysegerät (1) gemäß einem der Ansprüche 1 bis 3, wobei die Haltevorrichtung (40) zwischen zwei Haltearmen (42) beweglich gelagert ist.

5. Automatisches Analysegerät (1) gemäß Anspruch 4, wobei die beiden Haltearme (42) an dem Verbindungselement (41) angebracht oder von diesem gebildet sind.

6. Automatisches Analysegerät (1) gemäß einem der Ansprüche 1 bis 5, wobei die Haltevorrichtung (40) mit einer Kolbenstange (43) verbunden ist.

7. Automatisches Analysegerät (1) gemäß Anspruch 6, wobei die Kolbenstange (43) ferner mit einem motorisch betriebenen Exzenter (44) verbunden ist.

8. Automatisches Analysegerät (1) gemäß Anspruch 7, wobei der motorisch betriebene Exzenter (44) an dem Verbindungselement (41) angebracht ist.

9. Automatisches Analysegerät (1) gemäß einem der Ansprüche 3 bis 8, wobei an dem Verbindungselement (41) ein Sensor zur Positionsbestimmung der Haltevorrichtung (40) angebracht ist.

10. Automatisches Analysegerät (1) gemäß Anspruch 9, wobei der Sensor zur Positionsbestimmung der Haltevorrichtung (40) eine Lichtschranke ist, die an dem Verbindungselement (41) angebracht ist und wobei die Haltevorrichtung (40) ein Element zur Unterbrechung eines Lichtstrahls in der Lichtschranke aufweist.

11. Automatisches Analysegerät (1) gemäß einem der Ansprüche 1 bis 10, welches einen ersten und einen zweiten Vorratsbehälter (6, 7) mit jeweils einer Vielzahl von Aufnahmepositionen (11, 8) für jeweils einen Reagenzflüssigkeitsbehälter aufweist und wobei die erste Aufnahmeposition (11) für einen Reagenzflüssigkeitsbehälter in dem ersten Vorratsbehälter (6) vorgesehen ist und wobei die zweite Aufnahmeposition (8) in dem zweiten Vorratsbehälter (7) vorgesehen ist.

12. Automatisches Analysegerät (1) gemäß Anspruch 11, wobei der erste Vorratsbehälter (6) für einen Benutzer zugänglich ist.

13. Automatisches Analysegerät (1) gemäß einem der Ansprüche 11 und 12, welches ferner mindestens eine Pipettiervorrichtung (9) aufweist, die so beweglich ist, dass sie auf einen in dem zweiten Vorratsbehälter (7) gelagerten Reagenzflüssigkeitsbehälter Zugriff hat.

14. Automatisches Analysegerät (1) gemäß einem der vorhergehenden Ansprüche, welches ferner eine Steuereinrichtung aufweist, die so konfiguriert ist, dass sie ein Verfahren mit den folgenden Schritten steuert:
• Entnahme eines Reagenzflüssigkeitsbehälters aus einer ersten Aufnahmeposition (11) mittels der Vorrichtung (35) zum Transport eines Reagenzflüssigkeitsbehälters und Transport zu der schwenkbaren Haltevorrichtung (40) ;
• Positionieren des Reagenzflüssigkeitsbehälters in der schwenkbaren Haltevorrichtung (40); und
• Schwenken der Haltevorrichtung (40).

15. Automatisches Analysegerät (1) gemäß Anspruch 14, bei dem die Steuereinrichtung ferner so konfiguriert ist, dass die Haltevorrichtung (40) maximal 5 bis 20 mal hin und her geschwenkt wird.
